**Europäisches Patentamt**

(19) **European Patent Office**

**Office européen des brevets**

(11) Publication number : **0 388 766 B1**

# (12) EUROPEAN PATENT SPECIFICATION

(45) Date of publication of patent specification :
27.05.92 Bulletin 92/22

(51) Int. Cl.⁵ : **F16L 23/00,** F01N 7/08,
**F16J 15/08**

(21) Application number : **90104761.3**

(22) Date of filing : **13.03.90**

(54) Gasket material and method of manufacturing the same.

(30) Priority : **24.03.89 JP 73612/89**
**10.01.90 JP 3804/90**

(43) Date of publication of application :
**26.09.90 Bulletin 90/39**

(45) Publication of the grant of the patent :
**27.05.92 Bulletin 92/22**

(84) Designated Contracting States :
**DE FR GB IT**

(56) References cited :
**EP-A- 0 253 031**
**DE-A- 3 900 389**
**DE-B- 2 508 984**

(73) Proprietor : **NIPPON PILLAR PACKING CO. LTD.**
**11-48 Nonakaminami 2-chome Yodogawa-ku Osaka-shi Osaka-fu (JP)**

(72) Inventor : **Ueda, Takahisa**
**5-10, Mugogaoka 4-chome**
**Sanda-shi, Hyogo-ken (JP)**
Inventor : **Miyoshi, Takeshi**
**28-4 Miwa 4-chome**
**Sanda-shi, Hyogo-ken (JP)**

(74) Representative : **Fleuchaus, Leo, Dipl.-Ing. et al**
**Melchiorstrasse 42**
**W-8000 München 71 (DE)**

EP 0 388 766 B1

## Description

### Background of the Invention

#### 1. Field of the Invention

The present invention relates to a gasket material used for a pipe, a machine part or the like for handling high-temperature gas. The gasket material in accordance with the present invention may be suitably applied to a flange gasket or joint gasket for the exhaust tube of a motor vehicle.

#### 2. Description of the Invention

As such a gasket material used in the field above-mentioned, there are known gasket materials made of heat resisting fibers such as asbestos fibers, ceramic fibers, glass fibers and the like, or expanded graphite, or the like.

Among these gasket materials, the gasket material made of asbestos fibers is recently restricted in use to a considerably narrow range in view of environmental pollution. Further, the gasket materials above-mentioned are considerably decreased in strength and heat quantity due to vibration or gas errosion. This disadvantageously lowers the sealing properties required as the gasket material.

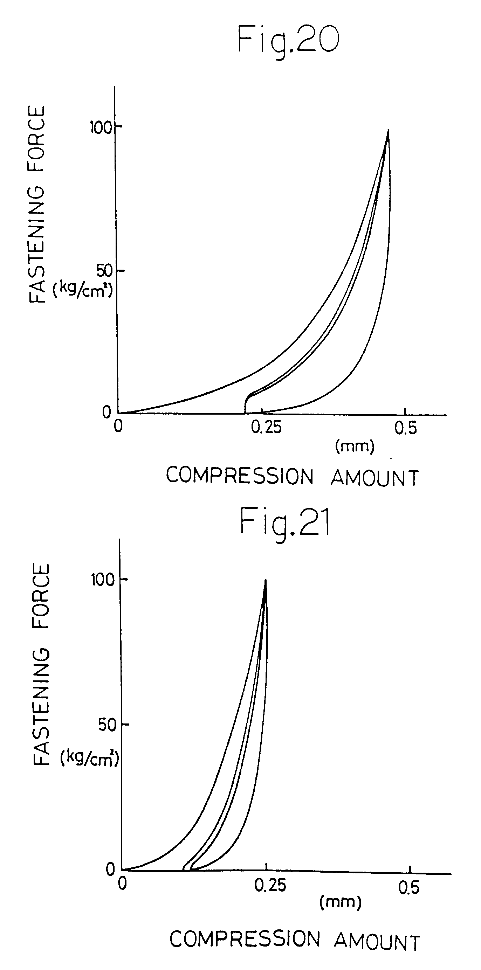

In addition to the gasket materials above-mentioned, there is also known, as shown in Fig. 19, a gasket 100 formed by knitting metallic wire members 101 each having a circular section. This gasket 100 is conventionally formed according to a method comprising the steps of knitting a plurality of wire members 101 into a band-like or a sac-like wire net, winding this wire net into a vortex shape, thereby to form a ring-like knitted body, and suitably pressing this ring-like knitted body into a cylindrical shape by pressing means.

In the gasket 100, however, even though a high fastening force required for sealing is applied, each wire member 101 having a circular section undergoes no substantial change in shape, and the circular section shape is maintained as it is before and after forming. This suggests that the area of the resultant gasket which comes in contact with the sealing surface is not great. More specifically, when the gasket 100 is pressingly fitted, as shown in Fig. 19, to a sealing portion 111 between an inner tube 109 and an outer tube 110 which form an exhaust tube, there are established linear contact relationships between the gasket 100 and the inner tube 109 and between the gasket 100 and the outer tube 110. Further, numberless gaps are formed in the gasket 100 between adjacent wire members 101, thereby to cause the material density to be coarse. This involves the likelihood that the gas easily leaks from these gaps. Thus, good sealing properties cannot be disadvantageously assured.

According to the conventional method for manufacturing the gasket 100 above-mentioned, it is required to mechanically knit a number of wire members 101. Accordingly, it takes much more time and labor to knit the wire net than to press and form the wire net into the ring-like body. Thus, the production cannot be speed up, resulting in increase in cost.

### Summary of the Invention

In view of the foregoing, the present invention is proposed with the object of providing a gasket material which may come in surface contact with a surface to be sealed and in which gaps are considerably reduced.

It is another object of the present invention to provide a gasket material excellent in strength.

It is a further object of the present invention to provide a gasket material to be readily molded, - thereby to assure improved working efficiency and mass production, and a method of manufacturing such a gasket material.

It is still another object of the present invention to provide a gasket material to be readily accomodated to the characteristic requirements according to applications and uses.

To achieve the objects above-mentioned, the gasket material in accordance with the present invention comprises an entangled body which is made of a metallic wire member, the member being so formed as to have a substantially rectangular section and the entangled body being press molded.

In the gasket material, the wire member is flat. Accordingly, when a fastening force required for sealing is applied, the gaps among portions of the wire member are small so that the density of the gasket material is high. Further, the flat wire member comes in surface contact with and sticks to a surface to be sealed. Accordingly, both the gasket material itself and the sealing portion may present considerably great sealing properties. Further, the present gasket material comprises the metallic wire member. This not only lessens the reduction in strength and heat quantity due to gas errosion or the like, but also provides excellent heat resistance in a high-temperature zone. This securely prevents the leakage of the fluid to be transported such as high-temperature gas or the like.

According to the present invention, the gasket material may be molded in the form of a sheet. A gasket having a desired shape may be obtained by punching such a sheet-like gasket material.

According to the present invention, the wire member may be overlappingly wound on a winding shaft a great number of times, thereby to obtain a gasket material molded in the form of a ring which partially or wholly corresponds to the shape of a gasket.

According to the present invention, the gasket material may contain a reinforcing sheet which is integrally laminated and bonded to a gasket material molded in the form of a sheet. The gasket material above-mentioned may improve the strength against a sealing force applied.

The reinforcing sheet may be made of a metallic material or inorganic fibers.

According to the present invention, the gasket material may contain a reinforcing sheet provided with engagement pawls adapted to eat into the pressingly molded body mainly made of the wire member. In the gasket material above mentioned, the engagement pawls prevent the wire member from being shifted in the direction at a right angle to the direction in which the sealing compressive force is exerted. Accordingly, the resiliency of the press molded body may be effectively maintained, thereby to restrain the sealing properties from being decreased.

According to the present invention, the gasket material may contain a reinforcing sheet made of a net. This gasket material may produces the same results as those above-mentined.

According to the present invention, the gasket material may contain fillers which are charged in gaps between adjacent portions of the wire member.

The gasket material of the present invention may readily hold the fillers as above-mentioned. The fillers may be selected from the group consisting of synthetic rubber, synthetic resin, inorganic powder and short fibers. By suitably selecting the fillers, there may be obtained a gasket material which satisfies the characteristic requirements according to applications and uses in a wider range.

According to the present invention, the gasket material manufacturing method comprises the steps of:

about a longitudinal axis curling a metallic wire member which has been so formed as to have a substantially rectangular section;

overlappingly winding, a great number of times, the curled wire member on the outer peripheral surface of a winding shaft, thereby to form a ring-like entangled body in which the curled portions of the wire member are entangled with one another; and

pressing and molding the ring-like entangled body into a predetermined shape by pressing means.

According to the gasket material manufacturing method, the wire member is curled and overlappingly wound on the outer surface of the winding shaft. This enables the adjacent curled portions of the wire member to be entangled with each other without the wire member knitting step which requires much labor and time. Further, the wire member so formed as to have a substantially rectangular section is overlappingly wound on the outer surface of the winding shaft, thereby to form the ring-like entangled body. Accordingly, when the ring-like entangled body is pressed by the pressing means, the adjacent portions of the wire member are tightly contact-pressed to each other. Further, the metallic wire member so formed as to have a substantially rectangular section may be readily deformed in a variety of directions, thus facilitating the molding operation.

Brief Description of the Drawings

Figure 1 is a longitudinal section view of a gasket material containing a laminated and bonded reinforcing sheet;

Figure 2 is a longitudinal section view of main portions of the gasket material;

Figure 3 is a perspective view of an untreated wire member;

Figure 4 is a perspective view of the wire member treated into a flat shape;

Figure 5 is a perspective view of the wire member so treated as to be curled;

Figure 6 is a perspective view of an entangled body of the line member;

Figure 7 is a longitudinal section view of another example of the gasket material containing laminated and bonded reinforcing sheets;

Figure 8 is a perspective view in longitudinal section elevation of a gasket formed by punching the gasket material shown in Figure 7 to which a grummet is applied;

Figure 9 is a longitudinal section view of a gasket material containing, in lamination, a knitted net at the intermediate layer thereof;

Figure 10 is a perspective view of a further example of the gasket material made in the form of a ring;

Figure 11 is a perspective view illustrating the step of overlappingly winding a wire member on a winding shaft;

Figure 12 is a section view illustrating the step of pressing and molding a ring-like entangled body of the line member;

Figure 13 is a longitudinal section view of a sealing portion, illustrating the use of the gasket material;

Figure 14 is an enlarged longitudinal section view of the gasket material in Figure 13;

Figure 15 is a longitudinal section view of the gasket material in accordance with another embodiment of the present invention, as combined with a cylindrical gasket material made of a metallic knitted net;

Figure 16 is a longitudinal section view of the gasket material in accordance with a further embodiment of the present invention, as fitted on the outer periphery of a cylindrical gasket made of a metallic knitted net;

Figure 17 is a longitudinal section view of the gasket material in accordance with still another embodiment of the present invention, as formed into the shape corresponding to the shape of a gasket in its entirety;

Figure 18 is a section view illustrating the gasket material in accordance with a still further embodiment of the present invention, which constitutes the core member of a metal-coated gasket;

Figure 19 is an enlarged longitudinal section - view of the sealing portion of a conventional gasket material as used;

Figure 20 is a graph of characteristics showing the results of a compression test of the gasket material in accordance with the present invention; and

Figure 21 is a graph of characteristics showing the results of a compression test of the conventional gasket material.

Detailed Description of the Preferred Embodiments

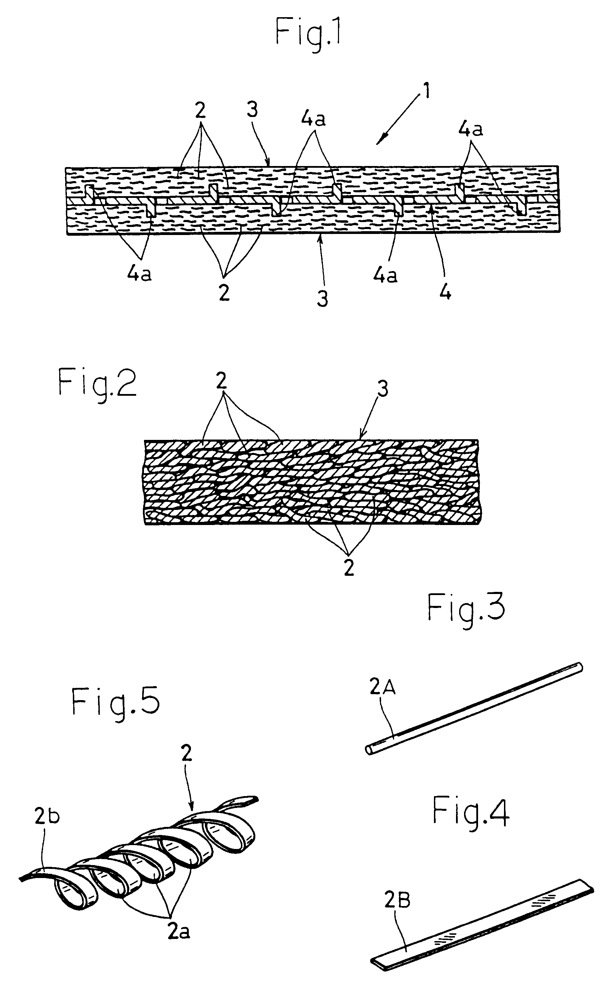

In Fig. 1, a heat-resisting gasket material 1 formed into a sheet comprises sheets 3 and a reinforcing sheet 4 integrally bonded, in lamination, to the sheets 3. Each sheet 3 is formed by a knitted body of a wire member 2. The reinforcing sheet 4 is made of a thin sheet. The following description will discuss the heat-resisting material 1 and the method of manufacturing the same.

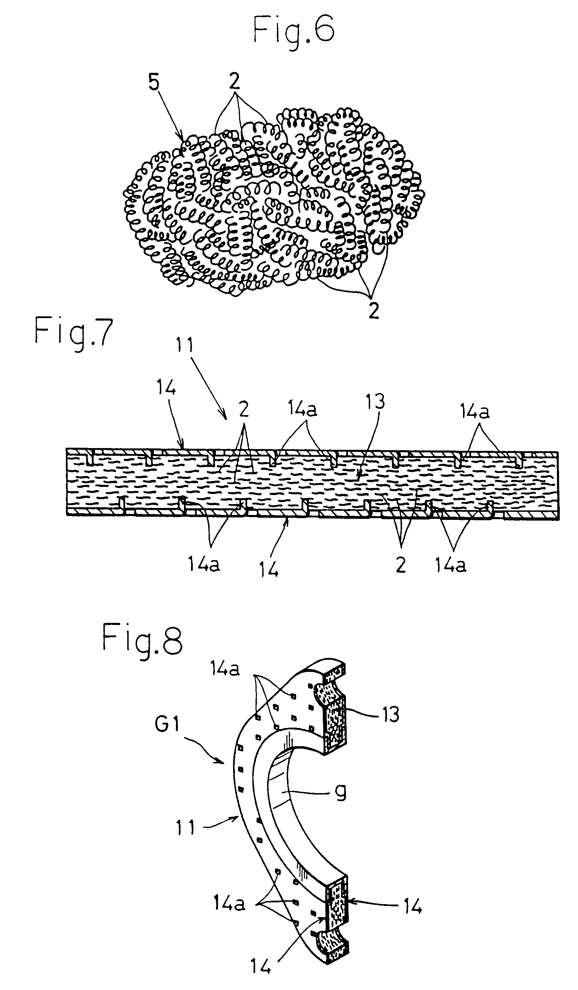

The wire member 2 forming each sheet 3 is made as follows. A wire member 2A having a circular section as shown in Fig. 3 is rolled and pressed to form a flat wire member 2B as shown in Fig. 4. For example, the wire member 2A having a diameter of 0.15 mm is rolled and pressed to form the wire member 2B having a thickness of 0.03 mm and a width of 0.5 mm. The flat member 2B is curled to form the wire member 2 having a number of curled portion 2a as shown in Fig. 5. For example, the flat member 2, 2B may be curled according to a simple method by which, while the corner of a suitable member is pushed to the flat member 2, 2B with tension applied thereto, the flat member 2, 2B is pulled, and the tension is then removed from the flat member 2, 2B.

The wire member 2, 2B thus formed is overlappingly wound a great numbe of times, thereby to form a wad-like entangled body 5 in which the overlapping portions of the wire member 2, 2B are entangled with one another, as shown in Fig. 6.

The entangled body 5 is uniformly pressed by suitable pressing means, causing the entangled body 5 to be tightly compressed to form the sheet 3. In this sheet 3, the portions of the flat wire member 2, 2B are deformed and tightly stick to one another by the tight-compression above-mentioned, as shown in Fig.2.

The thin sheet forming the reinforcing sheet 4, is a thin sheet having a thickness of, for example, 0.3 mm. This thin sheet is punched so that the sheet is provided on the upper and lower surfaces thereof with a number of projecting engagement pawls 4a at predetermined spatial intervals.

The sheets 3 are laminated on the upper and lower surfaces of the reinforcing sheet 4. The sheets 3, 4 as laminated are pressed in the thickness direction by suitable pressing means such as rollers or the like. Thus, there is formed the heat-resisting gasket material 1 in which the reinforcing sheet 4 is integrally laminated and bonded to the sheets 3. At this time, the heat-resisting gasket material 1 is made in the form of a sheet having an even thickness. In the heat-resisting gasket material 1, the engagement pawls 4a of the reinforcing sheet 4 eat into the laminated sheets 3, as shown in Fig. 1.

The heat-resisting gasket material 1 thus formed may be used at a leakage preventive portion of a pipe for transporting high-temperature gas or the like. In such a case, when a fastening force required for achieving a sealing function, is applied to the heat-resisting gasket material 1, the flat wire member 2, 2B is deformed correspondingly to the surface to be sealed and the wire member 2, 2B comes in surface contact with and sticks to the surface to be sealed. Accordingly, the sealing properties are improved to securely pre vent the leakage of a high-temperature gas or the like.

A compression test was conducted on the heat-resisting gasket material 1 above-mentioned of the present invention and the conventional gasket 100 - shown in Fig. 19. Fig. 20 is a graph of characte ristics presenting the test results of the gasket ma terial of the present invention, while Fig. 21 is a graph of characteristics presenting the test results of the conventional gasket material. In the tests, there were used the gasket material 1 and the gasket 100 each having a thickness of 2 mm and forming density of 3.0 $g/cm^3$.

As apparent by comparing the characteristics in Figs. 20 and 21 with each other, the compression - amount (deformation amount) of the gasket material 1 of the present invention is considerably greater than the compression amount of the conventional gasket 100. Since the gasket material 1 has better compression characteristics and the flat wire member 2, 2B may be deformed correspondingly to the surface to be sealed, the gasket material 1 is superior in fitness to the surface to be sealed to the gasket 100.

Further, the heat-resisting gasket material 1 comprises the sheets 3 composed of the metallic wire member 2, 2B and the reinforcing sheet 4 integrally lami nated and bonded thereto. Accordingly, the heat-re sisting gasket material 1 presents less decrease in strength and heat quantity and greater heat resistance in a high-temperature zone as compared with the con ventional gasket material using asbestos fibers, glass fibers, expanded graphite or the like. Further, since the flat wire member 2, 2B comes in surface contact with and sticks to the surface to be sailed, the heat-resisting gasket material 1 provides great sealing properties at the surface to be sealed. Further, since the wire member is flat, the gaps between the adjacent portions of the line member are small so that the density of the gasket material itself is high. Accordingly, the heat-resisting gasket material 1 provides considerably great sealing properties, thereby to securely prevent the leakage of a fluid to be transported such as high-temperature gas or the like. In the heat-resisting gasket, material 1, the engagement pawls 4a prevent the wire member 2, 2B from being shifted in the direction at a right angle to the direction in which a sealing compressive force is applied. Accordingly, the resiliency of the sheets 3 may be effectively maintained to restrain the sealing properties from being lowered.

Further, it is easy to fill, with fillers, the minute gaps in the sheets 3 forming the heat-resisting gasket material 1. The fillers have good holding properties. Accordingly, when there are used suitable fillers selected from the group consisting of synthetic rubber, synthetic resin, inorganic powder and short fibers, there may be obtained a heat-resisting gasket material which may satisfy the characteristic requirements for applications and uses in a wider range.

A heat-resisting gasket material 11 in accordance with the present invention in Fig. 7, comprises a sheet 13 disposed between and bonded to two reinforcing sheets 14. The sheet 13 is formed in a manner similar to that of each sheet 3 in Fig. 1. Each of the reinforcing sheet 14 is obtained by forming a plurality of engagement pawls 14a on a thin sheet having a thickness of 0.15 mm, the engagement pawls 14a projecting in one direction only. More specifically, with the engagement pawls 14a of the respective reinforcing sheets 14 eating into both sides of the sheet 13, the sheet 13 and the reinforcing sheets 14 are integrally bonded in lamination. This heat-resisting gasket material 11 may bring results substantially the same as those of the heat-resisting gasket material 1 mentioned earlier.

By punching the gasket material 1 or 11 as above-mentioned, there may be formed a gasket having predetermined sizes and shape.

Fig. 8 shows a ring-like heat-resisting gasket G1 formed by punching the gasket material 11 in Fig. 7. In the heat-resisting gasket G1, a metallic grummet ring g having a U-shape section is fitted to the inner peripheral surface of the gasket material 11 thus punched. By so doing, the gasket G1 may be suitably - used accoridng to the application.

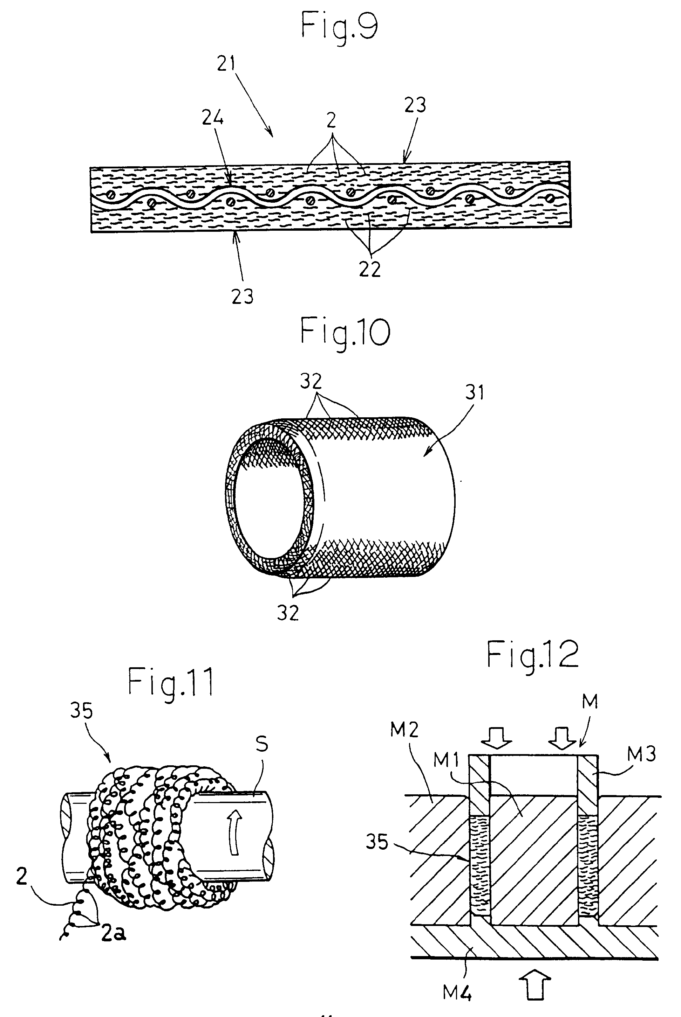

Fig. 9 shows a heat-resisting gasket material 21 in accordance with another embodiment of the present invention. This gasket material 21 comprises two rolled sheets 23 and a metallic net 24 serving as a reinforcing sheet, the sheets 23 and the net 24 being bonded together in lamination. The net 24 may be made of inorganic fibers. In this heat-resisting gasket material 21, the sheets 23 eat into the meshes of the net 24, thereby to prevent the sheets 23 from being transversely shifted. Accordingly, this gasket material 21 may also bring results substantially the same as those of the gasket material 1 or 11.

Fig. 10 shows a ring-like gasket material 31 in accordance with the present invention which comprises an entangled body of a metallic wire member 2 so formed as to have a substantially rectangular section. This gasket material 31 may be made according to the following method.

The metallic wire member 2, 2B is made according to the procedure shown in Figs. 3 to 5.

From the wire member 2, 2B there is formed a ring-like entangled body 35, as shown in Fig. 11, forming the gasket material 31. As shown in Fig. 11, the entangled body 35 is formed by overlappingly winding, a great number of times, the wire member 2 on a winding shaft S. That is, the base end 2b of the member 2 is secured to the outer peripheral surface of the winding shaft S, and the winding shaft S is then rotated so that the wire member 2, 2B is overlappingly wound on the shaft S a great number of times. In the ring-like entangled body 35 thus formed, the curled portions 2a of the member 2, 2B are entangled with one another.

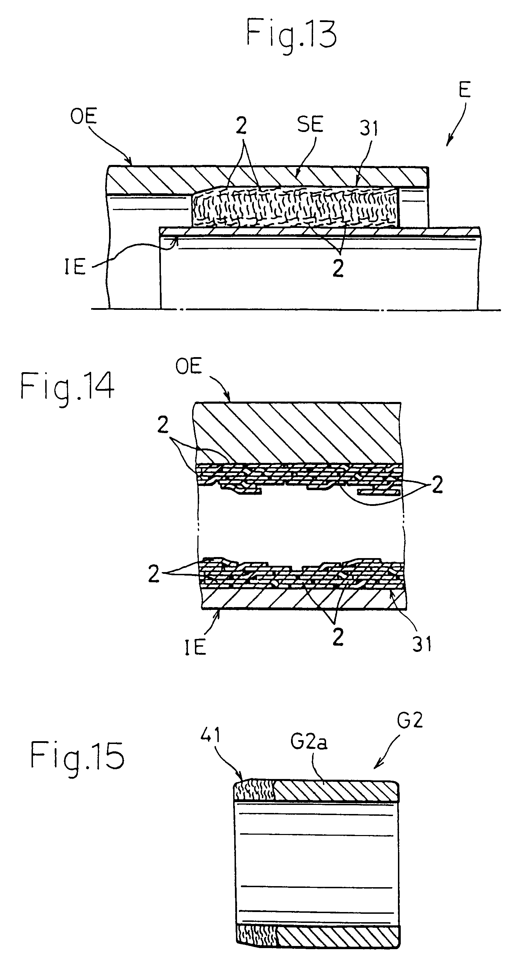

The ring-like entangled body 35 thus formed is pulled from the winding shaft S and pressingly molded by a mold M serving as pressing means, as shown in Fig. 12. More specifically, the inner mold M1 and the outer mold M2 of the mold M are concentrically disposed, and the ring-like entangled body 35 is put in the space formed between the inner and outer molds M1 and M2. Then, a pushing mold M3 to be fitted to the molds M1 and M2, and a bottom mold M4 are set. The ring-like entangled body 35 is uniformly compressed by the pushing mold M3, thereby to form the ring-like gasket material 31 shown in Fig. 10. In such a gasket material 31, the flat metallic wire member 2, 2B is deformed in different directions so that adjacent portions tightly stick to each other, as also shown in Fig. 14.

The gasket material 31 shown in Fig. 10 is formed into the shape of a gasket in its entirety. For example as shown in Fig. 13, this gasket material 31 may be forcibly pressingly inserted to a sealing portion SE formed between the outer peripheral surface of an inner tube IE and the inner peripheral surface of an outer tube OE, the inner tube IE and the outer tube OE forming an exhaust tube E. As shown in Fig. 14, the wire member 2, 2B forming the inner peripheral surface of the gasket material 31 comes in surface contact with the outer peripheral surface of the inner tube IE, and the wire member 2, 2B forming the outer peripheral surface of the gasket material 31 comes in surface contact with the outer tube OE.

Thus, in the gasket material 31, the respective portions of the wire member 2, 2B overlappinlgy wound a great numbe of times are tightly pressed so that the density of the gasket material 31 is high, and the wire member 2 forming the inner and outer peripheral surfaces of the gasket material 31 comes in surface contact with and stick to the surface to be sealed. Accordingly, the gasket material 31 itself has great sealing properties, and the sealing portion SE is also provided with great sealing properties.

In particular, when the gasket material 31 is manufactured according to the method above-mentioned, adjacent wire member portions are pressingly contacted with each other in a more tight manner. This is because the flat wire member 2, 2B of stainless steel is deformed in a variety of directions when the ring-like entangled body 35 is pressed by the inner and outer molds M1 and M2 forming the mold M. Accordingly, the gasket material 31 itself has higher density than that of the conventional gasket 100 in Fig. 19.

The method above-mentioned eliminates a mechanically knitting step with the use of a knitting machine or the like as conventionally done. Accordingly, the entire manufacturing steps may be simplified to assure improved efficiency and mass production.

In the gasket material 31 too, it is a matter of course that the minute gaps among the wire member portions may be filled with fillers. That is, there may be obtained, in addition to the gasket material solely made of the wire member 2, 2B a gasket material which additionally contains suitable fillers selected from the group consisting of synthetic rubber, synthetic resin, inorganic powder, short fibers and which satis fies the characteristic requirements according to ap plications and uses in a wider range.

Figs. 15 to 18 respectively show another exam ples of the gasket material 41, 51, 61, 71, to be manufactured according to the same method as for the gasket material 31, in accordance to the present in vention.

The gasket material 41 in Fig. 15 is- integrally bonded to the peripheral edge at one end of a cylin drical gasket material G2a made of a metallic knitted net. More specifically, this gasket material 41 is for med correspondingly to a portion of a gasket G2.

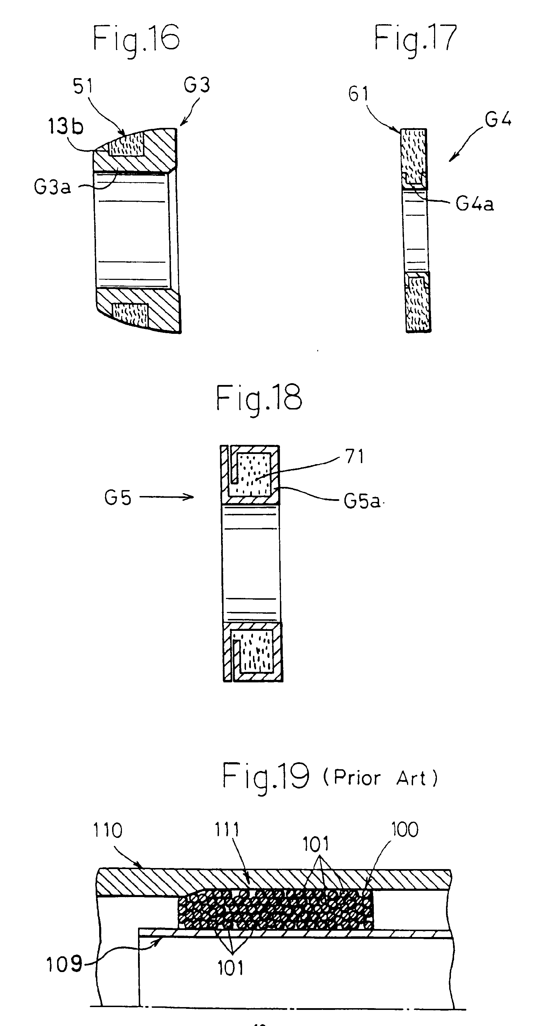

The gasket material 51 in Fig. 16 is formed cor respondingly to the shape of a portion of a cylindri cal gasket G3 having a conical outer pepripheral sur face. More specifically, an annular concave portion G3b is formed in the outer peripheral surface of a cylindrical gasket material G3a made of a metallic knitted net, and the gasket material 51 made according to the manufacturing method above-mentioned is fitted into this annular concave portion G3b, so that the gasket material 51 and the gasket material G3a are integrally bonded together.

Fig. 17 shows a ring-like gasket G4 in which a grummet ring G4a having a U-shape section is integrally fitted to the inner peripheral surface of the gasket material 61 pressed and formed into a ring shape.

The gasket material 71 pressed and formed into a ring shape shown in Fig. 18, forms a soft core member of a metal-coated gasket G5. That is, the gasket material 71 is coated with a metallic thin sheet G5a made of stainless steel or the like. Such a metal-coated gasket G5 has a cushioning function to assure high sealing properties, and may be used in an atmosphere at a temperature of 900°C or more.

As described hereinbefore, since the line member 2 so formed as to have a substantially rectangular section is susceptible to deformation, there may be manufactured a gasket material suitably formed to correspond to a portion of a gasket, according to the manufacturing method similar to the method for manufacturing the gasket material 31.

## Claims

1. A gasket material comprising an entangled body which is made of a metallic wire member, the member being so formed as to have a substantially rectangular section and the entangled body being press molded.

2. A gasket material according to Claim 1, mold ed in the form of a sheet.

3. A gasket material according to Claim 1, wherein the wire member is overlappingly wound a great number of times and then molded in the form of a ring.

4. A gasket material according to Claim 2, con taining an integrally laminated and bonded reinforcing sheet.

5. A gasket material according to Claim 3, wherein the wire member is longitudinally curled, and portions of said wire member are entangled with one another.

6. A gasket material according to Claim 4, wherein the wire member is longitudinally curled, and por tions of said wire member are entangled with one - another.

7. A gasket material according to Claim 5, whe rein the gaps between portions of the wire member are filled with fillers.

8. A gasket material according to Claim 6, whe rein the gaps between portions of the line member are filled with fillers.

9. A gasket material according to Claim 3, mol ded into a shape corresponding to the shape of a por tion of a gasket.

10. A gasket material according to Claim 5, mol ded into a shape corresponding to the shape of a por tion of a gasket.

11. A gasket material according to Claim 3, mol ded into a shape corresponding to the shape of a gasket in its entirety.

12. A gasket material according to Claim 5, mol ded into a shape corresponding to the shape of a gasket in its entirety.

13. A gasket material according to Claim 4, wherein the reinforcing sheet is made of a metallic material.

14. A gasket material according to Claim 4, wherein the reinforcing sheet is made of inorganic fibers.

15. A gasket material according to Claim 4, wherein the reinforcing sheet is plate-like and has engagement pawls adapted to eat into the pressingly molded body mainly made of the wire member.

16. A gasket material according to Claim 4, wherein the reinforcing sheet is made of a net.

17. A gasket material manufacturing method comprising the steps of:

curling about a longitudinal axis a metallic wire member which has been so formed as to have a susbtantially rectangular section;

overlappingly winding, a great number of times, said curled wire member on the outer peripheral surface of a winding shaft, thereby to form a ring-like entangled. body in which the curled portions of said wirde member are entangled with one another; and

molding said ring-like entangled body into a pre detrmined shape by pressing means.

## Patentansprüche

1. Dichtungsmaterial, enthaltend einen verknäuelten Körper bestehend aus einem Glied aus Metalldraht, wobei dieses Glied so geformt ist, daß es einen im wesentlichen rechteckigen Querschnitt aufweist und der verknäuelte Körper unter Druck formgepreßt ist.

2. Dichtungsmaterial gemäß Anspruch 1, das in der Form einer Platte ausgebildet ist.

3. Dichtungsmaterial gemäß Anspruch 1, bei dem das Draht glied mehrere Male übereinandergewickelt und dann in der Form eines Ringes ausgebildet ist.

4. Dichtungsmaterial gemäß Anspruch 2, das einstückig eine aus Schichten aufgebaute gebondete Verstärkungsplatte auf weist.

5. Dichtungsmaterial gemäß Anspruch 3, bei dem das Draht glied in Längsrichtung gekräuselt ist und Teile dieses Draht glieds miteinander verknäuelt sind.

6. Dichtungsmaterial gemäß Anspruch 4, bei dem das Draht glied in Längsrichtung gekräuselt ist und Teile dieses Draht glieds miteinander verknäuelt sind.

7. Dichtungsmaterial gemäß Anspruch 5, bei dem die Zwi schenräume zwischen den Teilen des Drahtglieds mit Füllstof fen gefüllt sind.

8. Dichtungsmaterial gemäß Anspruch 6, bei dem die Zwi schenräume zwischen den Teilen des Drahtglieds mit Füllstof fen gefüllt sind.

9. Dichtungsmaterial gemäß Anspruch 3, das in der Form eines Dichtungsteils ausgebildet ist.

10. Dichtungsmaterial gemäß Anspruch 5, das in der Form eines Dichtungsteils ausgebildet ist.

11. Dichtungsmaterial gemäß Anspruch 3, das in der Form einer ganzen Dichtung ausgebildet ist.

12. Dichtungsmaterial gemäß Anspruch 5, das in der Form einer ganzen Dichtung ausgebildet ist.

13. Dichtungsmaterial gemäß Anspruch 4, bei dem die Verstär kungsplatte aus metallischem Material besteht.

14. Dichtungsmaterial gemäß Anspruch 5, bei dem die Verstär kungsplatte aus anorganischen Fasern besteht.

15. Dichtungsmaterial gemäß Anspruch 4, bei dem die Verstär kungsplatte flach ist und Eingriffsklinken aufweist, die so ausgebildet sind, daß sie sich in den in der Hauptsache aus dem Drahtglied bestehenden, unter Druck formgepreßten Körper eingraben.

16. Dichtungsmaterial gemäß Anspruch 4, bei dem die Verstär kungsplatte aus einem Netz besteht.

17. Fertigungsverfahren für eine Dichtungsmaterial, das die folgenden Schritte umfaßt:

Kräuseln eines Glieds aus Metalldraht, das so geformt ist, daß es einen im wesentlichen rechteckigen Querschnitt auf weist, um eine Längsachse;

überlappendes, mehrmaliges Aufwickeln dieses gekräuselten Drahtglieds um die periphere Außenfläche einer Wickelwelle, um auf diese Weise einen ringförmigen, verknäuelten Körper herzustellen, bei dem die gekräuselten Teile dieses Draht glieds miteinander verknäuelt sind; und

Formen dieses ringförmigen, verknäuelten Körpers in eine vorgegebene Form mit Hilfe von Druckmitteln.

## Revendications

1. Matériau d'étanchéité comprenant un corps entremêlé, constitué par un fil métallique formé de façon à avoir une section pratiquement rectangulaire, le corps entremêlé étant moulé par compression.

2. Matériau d'étanchéité selon la revendication 1, moulé sous la forme d'une feuille.

3. Matériau d'étanchéité selon la revendication 1, dans lequel le fil métallique est enroulé un grand nombre de fois en se recouvrant et est ensuite moulé sous la forme d'un anneau.

4. Matériau d'étanchéité selon la revendication 2, contenant une feuille de renforcement stratifiée et adhérente pour former un matériau monobloc.

5. Matériau d'étanchéité selon la revendication 3, dans lequel le fil métallique est vrillé longitudinalement et des portions de ce fil sont entremêlées les unes avec les autres.

6. Matériau d'étanchéité selon la revendication 4, dans lequel le fil métallique est vrillé longitudinalement et des portions de ce fil sont entremêlées les unes avec les autres.

7. Matériau d'étanchéité selon la revendication 5, dans lequel les intervalles entre des portions du fil métallique sont remplis par des charges.

8. Matériau d'étanchéité selon la revendication 6, dans lequel les intervalles entre des portions du fil métallique sont remplis par des charges.

9. Matériau d'étanchéité selon la revendication 3, moulé en une forme correspondant à la forme d'une portion d'une garniture d'étanchéité.

10. Matériau d'étanchéité selon la revendication 5, moulé en une forme correspondant à la forme d'une portion d'une garniture d'étanchéité.

11. Matériau d'étanchéité selon la revendication 3, moulé en une forme correspondant à la forme d'une garniture d'étanchéité dans sa totalité.

12. Matériau d'étanchéité selon la revendication 5, moulé en une forme correspondant à la forme d'une garniture d'étanchéité dans sa totalité.

13. Matériau d'étanchéité selon la revendication 4, dans laquelle la feuille de renforcement est en un matériau métalli que.

14. Matériau d'étanchéité selon la revendication 4, dans lequel la feuille de renforcement est constituée par des fibres inorganiques.

15. Matériau d'étanchéité selon la revendication 4, dans lequel la feuille de renforcement est une tôle et a des saillies de coopération adaptées pour pénétrer dans le corps moulé par compression constitué principalement par le fil métallique.

16. Matériau d'étanchéité selon la revendication 4, dans lequel la feuille de renforcement est un réseau de mailles.

17. Procédé de fabrication d'un matériau d'étanchéité compre nant les stades suivants :

vriller autour d'un axe longitudinal un fil métallique qui a été formé de façon à avoir une section pratiquement rectangulai re;

enrouler un grand nombre de fois avec recouvrement ce fil métallique vrillé sur la surface périphérique extérieure d'un mandrin d'enroulement, formant ainsi un corps entremêlé de forme annulaire dans lequel les portions vrillées du fil métallique s'entremêlent les unes avec les autres; et

mouler ce corps entremêlé de forme annulaire à une forme prédéterminée par des moyens de compression.

Fig.1

Fig.2

Fig.3

Fig.5

Fig.4

## Fig.6

## Fig.7

## Fig.8

## Fig.9

## Fig.10

## Fig.11

## Fig.12

# Fig.13

# Fig.14

# Fig.15

## Fig.16

51    G3

13b

G3a

## Fig.17

61    G4

G4a

## Fig.18

G5 →    71

G5a

## Fig.19 (Prior Art)

110    111    101    100

109

101

## Fig.20

## Fig.21